(19) **Europäisches Patentamt / European Patent Office / Office européen des brevets**

(11) **EP 2 780 573 B1**

(12) **FASCICULE DE BREVET EUROPEEN**

(45) Date de publication et mention de la délivrance du brevet:
**01.02.2017 Bulletin 2017/05**

(51) Int Cl.:
*F02D 13/02* *(2006.01)*  *F02D 41/14* *(2006.01)*
*F02D 19/08* *(2006.01)*  *F02D 21/08* *(2006.01)*
*F02D 41/18* *(2006.01)*  *F02B 75/02* *(2006.01)*
*F02B 25/14* *(2006.01)*  *F02D 19/06* *(2006.01)*
*F02M 26/01* *(2016.01)*  *F02M 26/23* *(2016.01)*

(21) Numéro de dépôt: **12780761.8**

(22) Date de dépôt: **06.11.2012**

(86) Numéro de dépôt international:
**PCT/EP2012/071888**

(87) Numéro de publication internationale:
**WO 2013/072218 (23.05.2013 Gazette 2013/21)**

(54) **SYSTÈME ET PROCÉDÉ D'ESTIMATION DE LA RICHESSE DU MÉLANGE GAZEUX DANS LA CHAMBRE DE COMBUSTION D'UN MOTEUR À COMBUSTION INTERNE D'UN GROUPE MOTOPROPULSEUR DE VÉHICULE AUTOMOBILE**

ANORDNUNG UND VERFAHREN ZUR ABSCHÄTZUNG DER ZUSAMMENSETZUNG DES GASFÖRMIGEN GEMISCHES IN EINEM BRENNRAUM EINER BRENNKRAFTMASCHINE EINES ANTRIEBSTRANGS EINES AUTOMOBILS

SYSTEM AND METHOD FOR ESTIMATION OF THE GASEOUS MIXTURE COMPOSITION IN A COMBUSTION CHAMBER OF AN INTERNAL COMBUSTION ENGINE OF A DRIVETRAIN OF AN AUTOMOBILE VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.11.2011 FR 1160327**

(43) Date de publication de la demande:
**24.09.2014 Bulletin 2014/39**

(73) Titulaire: **Renault S.A.S.**
**92100 Boulogne-Billancourt (FR)**

(72) Inventeurs:
• **QUECHON, Nicolas**
  **91390 Morsang sur Orge (FR)**
• **OBERNESSER, Philippe**
  **F-75015 Paris (FR)**
• **DUGUE, Vincent**
  **F-91430 Igny (FR)**

(56) Documents cités:
EP-A1- 1 445 458   EP-A1- 1 571 318
DE-A1- 10 252 953   FR-A1- 2 868 127

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne l'estimation de la richesse du mélange gazeux dans la chambre de combustion d'un moteur à combustion interne d'un groupe motopropulseur de véhicule automobile en particulier d'un moteur du type deux temps.

Le document EP 1 445 458 A1 divulgue une estimation de la richesse du mélange gazeux dans la chambre de combustion d'un moteur à combustion interne d'un groupe motopropulseur de véhicule automobile, sur la base des quantités suivantes: un taux d'oxygène à l'échappement du moteur, un débit molaire d'oxygène admis dans le moteur, une composition du carburant, un débit du carburant et l'air provenant de la recirculation des gaz d'échappement en outre. Le document DE 102 52 953 A1 divulgue une estimation de la richesse du mélange gazeux dans la chambre de combustion d'un moteur à combustion interne d'un groupe motopropulseur de véhicule automobile, avec injection d'un gaz additionnel combustible dans le circuit d'admission en air frais du moteur, se basent sur des mesures du puissance et d'un débit d'air d'admission, et sur un rendement du moteur.

Pour tout type de moteurs, deux temps ou quatre temps à injection directe, ceux-ci comprennent le même nombre de phases dans un cycle de combustion, c'est-à-dire une admission, un échappement, une compression et une détente. Cependant, les cycles de combustion d'un moteur à deux temps diffèrent de ceux d'un moteur à quatre temps car le vilebrequin d'un moteur à deux temps effectue un tour au lieu de deux. La plage de temps pour effectuer l'admission et l'échappement est donc réduite pour un moteur à deux temps. En outre, pour un moteur à deux temps, les phases d'admission et d'échappement se superposent nettement, cette superposition est également notée croisement, et un phénomène de balayage apparaît.

Le phénomène de balayage correspond au fait qu'une partie des gaz admis dans le moteur, court-circuite les chambres de combustion des cylindres et passe directement dans le circuit d'échappement des gaz sans être brûlé. En d'autres termes, toute la quantité d'air frais admis dans le moteur n'est pas enfermée dans les chambres de combustion. Si les moteurs à quatre temps ont un faible croisement entre les phases d'admission et d'échappement, le phénomène de balayage apparaît également pour de tels moteurs. En particulier, le balayage peut être important pour des moteurs à quatre temps qui présentent des périodes d'ouvertures simultanées des soupapes d'admission et d'échappement, par exemple lors des stratégies de réouverture de la soupape d'échappement pendant la phase d'admission.

Le fait de ne pas connaître, ni la quantité d'air, ni la quantité de gaz résiduels (notés IGR), réellement enfermés dans les chambres de combustion, il est difficile de contrôler le moteur de manière précise (par exemple déterminer les réglages adéquats pour répondre à une sollicitation du conducteur). Il est également difficile d'optimiser le rendement, en particulier la consommation en carburant du moteur, et de contrôler le niveau des émissions polluantes, fortement dépendantes des conditions de mélange d'air et de gaz résiduels dans la chambre de combustion.

Par ailleurs, les émissions polluantes sont diluées avec la quantité d'air provenant du phénomène de balayage. Cette dilution fausse alors l'utilisation classique d'une sonde de richesse. En particulier, une mesure de la richesse du mélange gazeux à l'échappement du moteur ne correspond pas à la richesse du mélange gazeux dans la chambre de combustion du moteur. La richesse du mélange gazeux dans la chambre de combustion du moteur est un paramètre connu de l'homme du métier, et correspond de manière générale au rapport de la quantité de carburant sur la quantité d'air frais admis par le moteur, c'est-à-dire au rapport de la quantité de carburant sur la quantité d'air frais admis dans les chambres de combustion des cylindres.

I1 est particulièrement difficile de déterminer la quantité d'air frais réellement enfermée dans les chambres de combustion, ainsi que la quantité de gaz résiduels, car il faudrait alors procéder à un prélèvement des gaz dans les chambres de combustion, ce qui n'est pas envisageable sur un moteur fabriqué en série.

Il est donc difficile de déterminer la quantité de carburant à injecter pour obtenir le niveau de couple du moteur souhaité et répondre aux normes de pollution en suies, oxydes d'azotes, hydrocarbures et monoxyde de carbone.

En effet, les émissions polluantes sont fortement dépendantes des conditions thermodynamiques de la chambre de combustion. Par exemple, pour les suies, la maîtrise de la richesse du mélange gazeux dans la chambre de combustion du moteur est primordiale car le niveau de suies augmente extrêmement rapidement à partir d'un certain seuil de richesse. En particulier, si la quantité de carburant est trop élevée pour un point de fonctionnement du moteur, ou la masse d'air enfermée dans la chambre de combustion est trop faible, ou encore si la quantité de gaz résiduels est trop élevée, le niveau de suies risque d'être trop élevé.

En outre, pour les émissions d'oxydes d'azote, le taux de gaz résiduels étant extrêmement influant, le fait de ne pas déterminer avec précision ce taux rend très difficile le contrôle du moteur destiné à minimiser ce type d'émissions polluantes.

Il est donc proposé un système et un procédé pour estimer la richesse du mélange gazeux dans la chambre de combustion du moteur au début du cycle de combustion, afin, notamment, de pouvoir contrôler un moteur de véhicule automobile tout en optimisant la consommation en carburant et le rejet d'émissions polluantes.

Il est également proposé un moyen pour estimer la quantité de gaz résiduels au début du cycle de combustion.

Selon un aspect de l'invention, il est proposé un système d'estimation de la richesse du mélange gazeux dans la chambre de combustion d'un moteur à combustion interne d'un groupe motopropulseur de véhicule automobile.

Le système comprend des moyens pour injecter un gaz additionnel combustible dans un circuit d'admission en air frais du moteur, des moyens pour mesurer des concentrations du gaz additionnel respectivement dans le circuit d'admission en air frais et dans un circuit d'échappement des gaz du moteur, des moyens de détermination pour déterminer un rapport entre la mesure de la concentration du gaz additionnel dans le circuit d'admission et la mesure de la concentration du gaz additionnel dans le circuit d'échappement, et des moyens d'estimation pour estimer la richesse du mélange gazeux dans la chambre de combustion du moteur à partir du rapport déterminé.

Ce système est simple à réaliser et est particulièrement adapté à tout type de moteurs à deux ou quatre temps.

Le moteur peut comprendre plusieurs cylindres et les moyens d'estimation sont en outre configurés pour estimer un débit des gaz résiduels dans les cylindres à partir du rapport déterminé, et pour estimer la richesse du mélange gazeux dans la chambre de combustion du moteur à partir du débit des gaz résiduels estimé.

On fournit un moyen pour estimer une quantité de gaz résiduels afin de pouvoir contrôler de façon plus précise les émissions polluantes du moteur.

Le gaz additionnel peut être un hydrocarbure dont la chaîne carbonée comprend un nombre de carbones inférieur à cinq, de préférence, le gaz additionnel est du méthane.

Le groupe motopropulseur peut comprendre un circuit de recirculation partielle des gaz d'échappement raccordée au circuit d'admission en air frais.

Le moteur à combustion interne peut être du type deux temps.

Les moyens d'estimation peuvent en outre être configurés pour établir une cartographie du rapport déterminé en fonction du régime moteur, d'un débit d'air frais, d'un débit de carburant injecté dans le moteur, et d'un débit des gaz d'échappement recirculés.

Selon un autre aspect de l'invention, il est proposé un procédé d'estimation de la richesse du mélange gazeux dans la chambre de combustion d'un moteur à combustion interne d'un groupe motopropulseur de véhicule automobile.

Le procédé comprend une injection d'un gaz additionnel combustible dans un circuit d'admission en air frais du moteur, une détermination d'un rapport entre une mesure de la concentration du gaz additionnel dans le circuit d'admission en air frais et une mesure de la concentration du gaz additionnel dans un circuit d'échappement des gaz du moteur, et une estimation de la richesse du mélange gazeux dans la chambre de combustion du moteur à partir du rapport déterminé.

Le moteur peut comprendre plusieurs cylindres, le procédé comprenant une estimation intermédiaire d'un débit des gaz résiduels dans les cylindres à partir du rapport déterminé, et l'étape d'estimation de la richesse du mélange gazeux dans la chambre de combustion du moteur comporte une estimation de ladite richesse à partir du débit des gaz résiduels estimé.

Le groupe motopropulseur peut comprendre un circuit de recirculation partielle des gaz d'échappement raccordée au circuit d'admission en air frais, et le procédé peut en outre comprendre une élaboration d'une cartographie du rapport déterminé en fonction du régime moteur, d'un débit d'air frais, d'un débit de carburant injecté dans le moteur, et d'un débit des gaz d'échappement recirculés.

D'autres buts, caractéristiques et avantages de l'invention apparaîtront à la lecture de la description suivante, donnée uniquement à titre d'exemple non limitatif, et faite en référence aux dessins annexés, sur lesquels :

- la figure 1 est une vue schématique du phénomène de balayage pour un moteur à combustion interne ;
- la figure 2 est une vue schématique des principales étapes d'un mode de mise en oeuvre d'un procédé d'estimation de la richesse du mélange gazeux dans la chambre de combustion d'un moteur selon l'invention ; et
- la figure 3 illustre schématiquement un mode de réalisation d'un système d'estimation de la richesse du mélange gazeux dans la chambre de combustion d'un moteur à combustion interne selon l'invention.

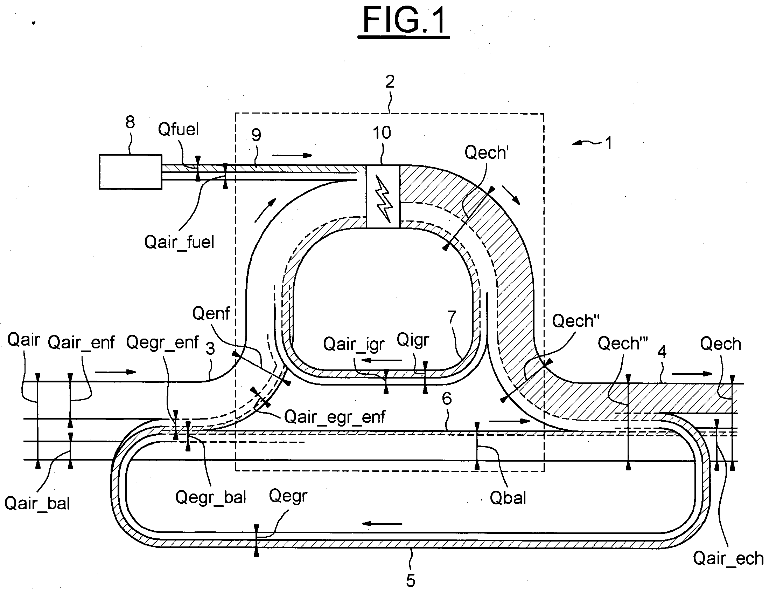

Sur la figure 1, on a représenté de façon schématique le phénomène de balayage pour un moteur à combustion interne 1 de véhicule automobile. Le moteur 1 peut être un moteur à quatre temps, de préférence à deux temps, de type diesel ou essence ou tout autre carburant. En outre, le moteur 1 peut équiper une automobile, un engin marin de navigation, un motocycle.

Le moteur 1 comprend plusieurs cylindres, et on a représenté ici, à des fins de simplification, une chambre de combustion 2 d'un cylindre. La chambre de combustion 2 est reliée, d'une part à un collecteur d'admission 3 pour injecter de l'air frais éventuellement mélangé avec une partie des gaz d'échappement dans la chambre 2, et d'autre part à un collecteur d'échappement des gaz 4.

Le moteur 1 peut également comprendre un circuit de recirculation partielle des gaz d'échappement 5 piqué entre le collecteur d'échappement des gaz 4 et le collecteur d'admission 3.

Sur la figure 1, on a également représenté une circulation court-circuit référencée 6, qui illustre, à titre schématique uniquement, la circulation des gaz qui passent directement du collecteur d'admission 3 au collecteur d'échappement 4 lors du phénomène de balayage.

Par ailleurs, on a représenté une recirculation interne référencée 7, qui illustre, à titre schématique uniquement, la recirculation interne d'une partie des gaz d'échappement, notée gaz résiduels, qui reste enfermée dans la chambre de combustion 2 lors de la phase d'échappement des gaz.

Le moteur 1 comprend également un injecteur 8 qui injecte, par l'intermédiaire d'un conduit d'injection 9, une quantité de carburant dans la chambre de combustion 2, représentée ici en hachuré, avec éventuellement une quantité d'air représentée sans hachure qui est distinct de l'air frais admis dans le collecteur d'admission 3.

De façon générale, les flèches de la figure 1 représentent les sens de circulation des fluides, et les parties hachurées, hormis celle qui représente l'injection du carburant, représentent la circulation des gaz brûlés, les parties sans hachures celles de la circulation de l'air frais.

On a en outre représenté la combustion des gaz référencée 10 dans la chambre 2.

Afin de représenter les débits massiques des gaz dans le moteur 1 lors des cycles de combustion, on a reporté sur la figure 1 les données suivantes :

- Qair (en kg/h) : le débit massique de l'air frais admis dans la chambre de combustion 2 ;
- Qenf (en kg/h) : le débit massique de gaz admis dans la chambre de combustion 2 ;
- Qbal (en kg/h) : le débit massique des gaz qui balayent le moteur 1 ;
- Qair_bal (en kg/h) : le débit massique de l'air frais qui balaye le moteur 1, en d'autres termes la quantité d'air frais qui passe directement dans le collecteur d'échappement 4 lors de la phase d'admission des gaz ;
- Qair_enf (en kg/h) : le débit massique de l'air frais enfermé dans la chambre de combustion 2 ;
- Qegr (en kg/h) : le débit massique des gaz d'échappement recirculés (air frais et gaz brûlés) ;
- Qegr_bal (en kg/h) : le débit massique des gaz d'échappement recirculés qui balayent le moteur 1 ;
- Qegr_enf (en kg/h) : le débit massique des gaz d'échappement recirculés enfermés dans la chambre de combustion 2 ;
- Qair_egr_enf (en kg/h) : le débit massique de l'air frais contenu dans les gaz d'échappement recirculés enfermés dans la chambre de combustion 2 ;
- Qfuel (en kg/h) : le débit massique de carburant admis dans la chambre de combustion 2 ;
- Qair_fuel (en kg/h) : le débit massique de l'air injecté avec le carburant dans la chambre de combustion 2;
- Qigr (en kg/h) : le débit massique des gaz résiduels, en d'autres termes la quantité de gaz (air frais et gaz brûlés) qui restent dans la chambre de combustion 2 lors de la phase d'échappement des gaz ;
- Qair_igr (en kg/h) : le débit massique de l'air frais contenu dans les gaz résiduels ;
- Qech (en kg/h) : le débit massique des gaz d'échappement ;
- Qair_ech (en kg/h) : le débit massique de l'air frais contenu dans les gaz d'échappement ;
- Qech'" (en kg/h) : le débit massique des gaz d'échappement avant la recirculation partielle des gaz d'échappement 5;
- Qech" (en kg/h) : le débit massique des gaz d'échappement avant la recirculation partielle des gaz d'échappement 5 et avant la circulation court-circuit 6; et
- Qech' (en kg/h) : le débit massique des gaz d'échappement avant la recirculation interne 7.

D'après les données décrites ci-avant, on a les équations suivantes :

$$\text{Qair} = \text{Qair\_bal} + \text{Qair\_enf} \qquad (\text{équation 1})$$

$$\text{Qegr} = \text{Qegr\_bal} + \text{Qegr\_enf} \qquad (\text{équation 2})$$

$$\text{Qenf} = \text{Qair\_enf} + \text{Qegr\_enf} \qquad (\text{équation 3})$$

$$\text{Qbal} = \text{Qair\_bal} + \text{Qegr\_bal} \qquad (\text{équation 4})$$

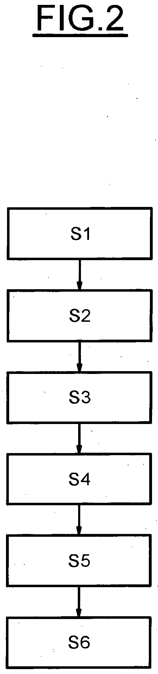

Sur la figure 2, on a représenté schématiquement les principales étapes d'un procédé d'estimation de la richesse du mélange gazeux dans la chambre de combustion du moteur à combustion interne 1 décrit à la figure 1.

Dans une première étape S1, on injecte, dans le collecteur d'admission 3, un gaz additionnel combustible. L'injection est réalisée suffisamment en amont du moteur 1, par exemple en amont de la jonction entre le circuit de recirculation partielle des gaz d'échappement 5 et le collecteur d'admission 3, de façon à garantir un mélange homogène entre le gaz additionnel combustible et l'air frais. Ainsi, lors de la phase de balayage, une partie de la masse du gaz additionnel est enfermée dans la chambre de combustion 2 et une autre partie du gaz additionnel passe dans le collecteur d'échappement 4. Du fait de l'homogénéité du mélange air frais et gaz additionnel, le rapport des masses des parties du gaz additionnel est égal au rapport entre la masse d'air frais enfermée dans la chambre de combustion 2 et la masse d'air frais balayée qui passe dans le collecteur d'échappement 4. Le gaz additionnel combustible peut être de l'éthane, du propane, ou du butane, et de préférence du méthane CH4. Le gaz additionnel est un combustible adapté pour que la partie enfermée puisse être brûlée lors de la combustion.

Lors d'une deuxième étape S2, on mesure les concentrations du gaz additionnel combustible à l'admission %GCadm et à l'échappement %GCech du moteur, puis on calcule S3 le rapport des concentrations RC=%GCadm/%GCech. A partir du rapport des concentrations RC calculé, on détermine S4 un rapport d'air enfermé TA selon l'équation (5) suivante :

$$TA = 1 - \frac{Qair + Qfuel + Qair\_fuel + Qegr}{Qair \cdot \left( \dfrac{\%GCadm}{\%GCech} + \dfrac{Qegr}{Qair} \right)} \quad (\text{équation } 5)$$

avec :

- %GCadm : concentration du gaz additionnel combustible dans le collecteur d'admission 3 ; et
- %GCech : concentration du gaz additionnel combustible dans le collecteur d'échappement 4.

On notera que pour certains systèmes d'injection, une quantité d'air Qair_fuel est ajoutée au débit de carburant Qfuel. Pour les autres systèmes, le débit massique de l'air injecté Qair_fuel est nul.

Le rapport d'air enfermé TA correspond au quotient entre la masse d'air enfermée dans la chambre de combustion par la masse d'air frais admis dans la chambre de combustion 2. Le rapport d'air enfermé TA peut en outre être cartographié en fonction du régime moteur, de mesures du débit d'air frais Qair, du débit de carburant Qfuel injecté dans le moteur, du débit Qair_fuel de l'air injecté avec le carburant, et du débit Qegr des gaz d'échappement recirculés. La cartographie du rapport TA peut ensuite être utilisée lors du fonctionnement du véhicule en vu de déterminer d'autres paramètres de contrôle du moteur.

En particulier, le débit massique des gaz d'échappement recirculés Qegr peut être calculé à partir de mesures de concentration en dioxyde de carbone %CO2 à l'admission et à l'échappement du moteur 1 d'après l'équation (6) suivante :

$$Qegr = Qair \cdot \frac{\%CO2adm - \%CO2atm}{\%CO2ech - \%CO2adm} \quad (\text{équation } 6)$$

avec :

- %C02adm : la concentration en dioxyde de carbone dans le collecteur d'admission 3 ;
- %CO2ech : la concentration en dioxyde de carbone dans le collecteur d'échappement 4 ; et
- %C02atm : la concentration en dioxyde de carbone dans l'atmosphère et dans les conditions normales de température et de pression.

Dans une cinquième étape S5, on estime le débit Qigr massique des gaz résiduels à partir du rapport d'air enfermé TA déterminé à l'étape S4 d'après l'équation (7) suivante :

$$Qigr = \frac{cp_{adm} \cdot n \cdot N \cdot 60 \cdot P_{RFA} \cdot V_{RFA}}{r \cdot cp_{ech} \cdot T3'} - \frac{cp_{adm} \cdot Qair\_enf \cdot T2}{cp_{ech} \cdot T3'} - \frac{Qegr\_enf \cdot T4}{T3'}$$

(équation 7)

avec :

$$- \ Qair\_enf = TA \cdot Qair \qquad \text{(équation 8) ;}$$

$$- \ Qegr\_enf = TA \cdot Qegr \qquad \text{(équation 9) ;}$$

- $cp_{adm}$ (kJ/(kg·K)): capacité calorifique des gaz d'admission ;
- n : le nombre de cylindres du moteur 1 ;
- N (tour/minutes): le régime du moteur ;
- $P_{RFA}$ : la pression de la chambre de combustion 2 à l'instant de fermeture de la soupape d'admission, ou de la lumière du conduit d'admission ;
- $V_{RFA}$ : le volume de la chambre de combustion 2 à l'instant de fermeture de la soupape d'admission, ou de la lumière du conduit d'admission ;
- r = 287 J/(kg·K): la constante des gaz parfaits ; et
- $cp_{ech}$ (kJ/(kg·K)): capacité calorifique des gaz d'échappement ;

$$- \ T3' = \frac{cp_{ech} \cdot Qech''' \cdot T3 - cp_{bal} \cdot (1 - TR) \cdot (Qair + Qegr) \cdot T4'}{cp_{ech} \cdot Qech''} \qquad \text{(équation 10) ;}$$

$$- \ T4' = \frac{cp_{adm} \cdot Qair\_bal \cdot T2 - cp_{ech} \cdot Qegr\_bal \cdot T4}{cp_{adm} \cdot Qair\_bal + cp_{ech} \cdot Qegr\_bal} \qquad \text{(équation 11) ;}$$

$$cp_{adm\_bal} = \frac{cp_{adm} \cdot Qair\_bal + cp_{ech} \cdot Qegr\_bal}{Qbal} \qquad \text{(équation 12)}$$

$$cp_{adm\_enfl} = \frac{cp_{adm} \cdot Qair\_enf + cp_{ech} \cdot Qegr\_enf}{Qenf} \qquad \text{(équation 13)}$$

$$- \ Qech'' = Qfuel + Qair\_fuel + TA \cdot (Qair + Qegr) \qquad \text{(équation 14) ;}$$

$$- \ Qech''' = Qech + Qegr \qquad \text{(équation 15) ;}$$

- T2 (K) : la température d'admission du moteur ;
- T3 (K) : la température d'échappement du moteur ; et
- T4 (K) : la température des gaz d'échappement recirculés refroidis.

Les températures T2 à T4 sont mesurées par des capteurs de températures.
Après avoir estimé le débit Qigr massique des gaz résiduels, on peut calculer le taux Tigr de gaz résiduels selon l'équation (14) suivante :

$$Tigr = \frac{Qigr}{Qigr + Qair\_enf + Qegr\_enf} \qquad \text{(équation 16)}$$

Puis, on estime la richesse du mélange gazeux dans la chambre de combustion du moteur Rmot selon l'équation (15) suivante :

$$Rmot = \frac{PCO \cdot Qfuel}{Qair\_enf + Qair\_egr\_enf + Qair\_igr + Qair\_fuel}$$

(équation 17)

avec :

- PCO=14,7 : le pouvoir comburivore du carburant ;

$$- \; Qair\_egr\_enf = \frac{Qair\_ech}{Qech} \cdot Qegr\_enf \quad \text{(équation 18) ;}$$

$$- \; Qair\_ech = Qech - Qfuel \cdot (1 + PCO \cdot FMB) \, \text{(équation 19) ;}$$

- FMB : fraction de masse brulée ou rendement de combustion ;

$$- \; Qair\_igr = \frac{Qair\_ech - Qair\_bal + Qair\_egr\_enf}{Qair\_enf + Qegr\_enf + Qfuel + Qair\_fuel} \cdot Qigr$$

(équation 20).

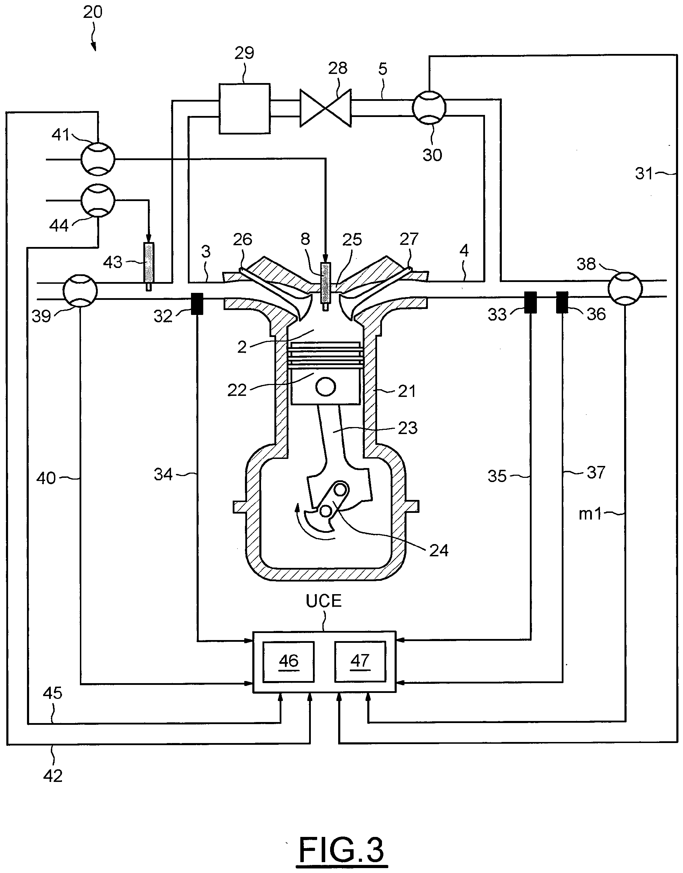

Sur la figure 3, on a représenté schématiquement un système d'estimation 20 de la richesse Rmot du mélange gazeux dans la chambre de combustion du moteur à combustion interne 1 décrit à la figure 1. Le système d'estimation 20 est en outre configuré pour mettre en oeuvre le procédé d'estimation décrit ci-avant.

Le moteur à combustion interne 1 comprend plusieurs cylindres, dont on a représenté à des fins de simplification un cylindre 21 dans lequel se déplace un piston 22 par l'intermédiaire d'une bielle 23 reliant le piston 22 à un vilebrequin 24. La chambre de combustion 2 du moteur 1 est délimitée par ledit cylindre 21, ledit piston 22 et une culasse 25. Selon un premier mode de réalisation, la culasse 25 est munie d'au moins deux soupapes 26,27 qui permettent de relier la chambre de combustion 2 avec respectivement le collecteur d'admission 3, et le collecteur d'échappement des gaz 4. Selon un deuxième mode de réalisation, la culasse 25 ne comprend pas de soupapes, et comporte à la place une lumière d'admission, ou conduit d'admission, qui relie la chambre de combustion 2 avec le collecteur d'admission 3, et une lumière d'échappement, ou conduit d'échappement, qui relie la chambre de combustion 2 avec le collecteur d'échappement des gaz 4. Le deuxième mode de réalisation convient particulièrement aux moteurs à deux temps, dont le fonctionnement est connu de l'homme de l'art, en particulier dont le mouvement du piston 22 permet d'une part d'obturer les lumières d'admission et d'échappement lors des phases de combustion et de détente, et d'autre part de permettre la communication des lumières avec la chambre de combustion 2 lors des phases d'admission et d'échappement des gaz.

Le circuit de recirculation partielle des gaz d'échappement 5 comprend une vanne 28, notée vanne EGR, un dispositif de refroidissement 29 des gaz, et un débitmètre 30 pour mesurer le débit Qegr. La mesure du débit Qegr est transmise par une connexion 31, en direction d'une unité de commande électronique UCE.

Le système d'estimation 1 comprend en outre des capteurs 32,33 pour mesurer respectivement la concentration massique de dioxyde de carbone à l'admission %CO2adm, et la concentration massique de dioxyde de carbone à l'échappement %CO2ech, et pour transmettre ces informations à l'UCE par des connexions respectives 34,35.

Le système comporte un capteur 36 pour mesurer la concentration %GCadm du gaz additionnel combustible dans le collecteur d'échappement 4 et pour la transmettre à l'UCE par la connexion 37.

Un débitmètre 38 situé en aval du collecteur d'échappement des gaz 4 mesure le débit des gaz d'échappement Qech et transmet la mesure à l'UCE par une connexion m1.

Un débitmètre 39 situé en amont du collecteur d'admission 3 mesure le débit d'air frais Qair et transmet la mesure à l'UCE par une connexion 40. Un débitmètre 41 couplé à l'injecteur 8 de carburant mesure le débit de carburant Qfuel et transmet la mesure à l'UCE par une connexion 42.

Un injecteur 43 injecte le gaz additionnel combustible dans le circuit d'admission en air frais du moteur. L'injecteur 43 est situé en amont du collecteur d'admission 3, par exemple entre le débitmètre 39 et le collecteur d'admission 3. Un débitmètre 44 couplé à l'injecteur 43 de gaz additionnel combustible mesure le débit de gaz additionnel et transmet la mesure à l'UCE par une connexion 45, afin que l'UCE puisse calculer la concentration %GCadm du gaz additionnel combustible dans le collecteur d'admission 3.

L'UCE comporte des moyens de détermination 46 configurés pour déterminer le rapport des concentrations RC=%GCadm/%GCech à partir de la mesure délivrée par le capteur 36 et la mesure délivrée par le débitmètre 44. L'UCE comporte également des moyens d'estimations 47 pour estimer le débit Qigr à partir du rapport des concentrations RC et pour estimer la richesse du mélange gazeux dans la chambre de combustion du moteur Rmot à partir du débit Qigr.

Le procédé et le système qui viennent d'être décrits permettent de contrôler un moteur à combustion interne afin d'optimiser la consommation en carburant et les niveaux des émissions polluantes. En particulier, les estimations de la richesse du mélange gazeux dans la chambre de combustion du moteur Rmot et du débit Qigr sont effectuées à partir de simples mesures de débit et de température. La cartographie du rapport d'air enfermé TA et les estimations précédentes permettent d'ajuster les paramètres du moteur, par exemple la suralimentation et l'injection, afin de limiter les émissions polluantes et la consommation en carburant du moteur.

## Revendications

1. Système d'estimation de la richesse du mélange gazeux dans la chambre de combustion d'un moteur (1) à combustion interne d'un groupe motopropulseur de véhicule automobile, comprenant des moyens (43) pour injecter un gaz additionnel combustible dans le circuit d'admission (3) en air frais du moteur, la partie du gaz additionnel combustible enfermée dans la chambre de combustion étant brulée lors d'une combustion, **caractérisé en ce qu'**il comprend des moyens (36,44) pour mesurer les concentrations du gaz additionnel respectivement dans le circuit d'admission (3) en air frais et dans le circuit d'échappement (4) des gaz du moteur, des moyens de détermination (46) d'un rapport entre la mesure de la concentration du gaz additionnel dans le circuit d'admission et la mesure de la concentration du gaz additionnel dans le circuit d'échappement, et des moyens d'estimation (47) de la richesse du mélange gazeux dans la chambre de combustion du moteur à partir du rapport déterminé.

2. Système selon la revendication 1, dans lequel le moteur (1) comprend plusieurs cylindres et les moyens d'estimation (47) sont en outre configurés pour estimer un débit des gaz résiduels dans les cylindres à partir du rapport déterminé, et pour estimer la richesse du mélange gazeux dans la chambre de combustion du moteur à partir du débit des gaz résiduels estimé.

3. Système selon la revendication 1 ou 2, dans lequel le groupe motopropulseur comprend un circuit (5) de recirculation partielle des gaz d'échappement raccordé au circuit d'admission (3) en air frais.

4. Système selon l'une des revendications 1 à 3, dans lequel le moteur (1) à combustion interne est du type deux temps.

5. Système selon la revendication 3 ou 4, dans lequel les moyens d'estimation (47) sont configurés pour établir une cartographie du rapport déterminé en fonction d'un débit d'air frais, d'un débit de carburant injecté dans le moteur, et d'un débit des gaz d'échappement recirculés.

6. Procédé d'estimation de la richesse du mélange gazeux dans la chambre de combustion d'un moteur à combustion interne d'un groupe motopropulseur de véhicule automobile, comprenant une injection (S1) d'un gaz additionnel combustible dans le circuit d'admission en air frais du moteur, la partie du gaz additionnel combustible enfermée dans la chambre de combustion étant brulée lors d'une combustion, **caractérisé en ce qu'**il comprend une détermination (S3) d'un rapport entre une mesure de la concentration du gaz additionnel dans le circuit d'admission en air frais et une mesure de la concentration du gaz additionnel dans le circuit d'échappement des gaz du moteur, et une estimation (S6) de la richesse du mélange gazeux dans la chambre de combustion du moteur à partir du rapport déterminé.

7. Procédé selon la revendication 6, dans lequel le moteur comprend plusieurs cylindres, le procédé comprenant une estimation (S5) intermédiaire d'un débit des gaz résiduels dans les cylindres à partir du rapport déterminé, et l'étape (S6) d'estimation de la richesse du mélange gazeux dans la chambre de combustion du moteur comporte une estimation de ladite richesse à partir du débit des gaz résiduels estimé.

8. Procédé selon la revendication 6 ou 7, dans lequel le groupe motopropulseur comprend un circuit de recirculation partielle des gaz d'échappement raccordée au circuit d'admission en air frais, le procédé comprenant en outre une élaboration d'une cartographie du rapport déterminé en fonction du régime moteur, d'un débit d'air frais, d'un débit de carburant injecté dans le moteur, et d'un débit des gaz d'échappement recirculés.

**Patentansprüche**

1. System zur Abschätzung der Reichhaltigkeit des gasförmigen Gemischs in dem Brennraum einer Brennkraftmaschine (1) eines Antriebsstrangs eines Automobils, das Mittel (43) zum Einspritzen eines zusätzlichen brennbaren Gases in den Frischluft-Ansaugkreislauf (3) der Brennkraftmaschine umfasst, wobei der Teil des zusätzlichen brennbaren Gases, der in dem Brennraum eingeschlossen ist, bei einer Verbrennung verbrannt wird, **dadurch gekennzeichnet, dass** es Mittel (36, 44) zum Messen der Konzentrationen des zusätzlichen Gases jeweils in dem Frischluft-Ansaugkreislauf (3) und in dem Abgaskreislauf (4) der Gase der Brennkraftmaschine, Mittel zum Bestimmen (46) eines Verhältnisses zwischen der Messung der Konzentration des zusätzlichen Gases in dem Ansaugkreislauf und der Messung der Konzentration des zusätzlichen Gases in dem Abgaskreislauf, sowie Mittel zum Abschätzen (47) der Reichhaltigkeit des gasförmigen Gemisches in dem Brennraum der Brennkraftmaschine ausgehend von dem bestimmten Verhältnis umfasst.

2. System nach Anspruch 1, wobei die Brennkraftmaschine (1) mehrere Zylinder umfasst und die Mittel zum Abschätzen (47) außerdem konfiguriert sind, um einen Durchsatz der Restgase in den Zylindern ausgehend von dem bestimmten Verhältnis abzuschätzen, und um die Reichhaltigkeit des gasförmigen Gemisches in dem Brennraum der Brennkraftmaschine ausgehend von dem abgeschätzten Durchsatz der Restgase abzuschätzen.

3. System nach Anspruch 1 oder 2, wobei der Antriebsstrang einen Kreislauf (5) zur teilweisen Rückführung der Abgase, der an den Frischluft-Ansaugkreislauf (3) angeschlossen ist, umfasst.

4. System nach einem der Ansprüche 1 bis 3, wobei die Brennkraftmaschine (1) vom Zweitakttyp ist.

5. System nach Anspruch 3 oder 4, wobei die Mittel zum Abschätzen (47) konfiguriert sind, um eine Kartographie des bestimmten Verhältnisses in Abhängigkeit von einem Frischluftdurchsatz, einem Durchsatz an Kraftstoff, der in die Brennkraftmaschine eingespritzt wird, und einem Durchsatz der rückgeführten Abgase zu ermitteln.

6. Verfahren zum Abschätzen der Reichhaltigkeit des gasförmigen Gemisches in dem Brennraum einer Brennkraftmaschine eines Antriebsstrangs eines Automobils, das eine Einspritzung (S1) eines zusätzlichen brennbaren Gases in den Frischluft-Ansaugkreislauf der Brennkraftmaschine umfasst, wobei der Teil des zusätzlichen brennbaren Gases, der in dem Brennraum eingeschlossen ist, bei einer Verbrennung verbrannt wird, **dadurch gekennzeichnet, dass** es eine Bestimmung (S3) eines Verhältnisses zwischen einer Messung der Konzentration des zusätzlichen Gases in dem Frischluft-Ansaugkreislauf und einer Messung der Konzentration des zusätzlichen Gases in dem Abgaskreislauf der Gase der Brennkraftmaschine sowie eine Abschätzung (S6) der Reichhaltigkeit des gasförmigen Gemisches in dem Brennraum der Brennkraftmaschine ausgehend von dem bestimmten Verhältnis umfasst.

7. Verfahren nach Anspruch 6, wobei die Brennkraftmaschine mehrere Zylinder umfasst, wobei das Verfahren eine Zwischenabschätzung (S5) eines Durchsatzes der Restgase in den Zylindern ausgehend von dem bestimmten Verhältnis umfasst, und der Schritt (S6) der Abschätzung der Reichhaltigkeit des gasförmigen Gemisches in dem Brennraum der Brennkraftmaschine eine Abschätzung der Reichhaltigkeit ausgehend von dem abgeschätzten Durchsatz der Restgase umfasst.

8. Verfahren nach Anspruch 6 oder 7, wobei der Antriebsstrang einen Kreislauf zur teilweisen Rückführung der Abgase umfasst, der an den Frischluft-Ansaugkreislauf angeschlossen ist, wobei das Verfahren außerdem eine Ermittlung einer Kartographie des bestimmten Verhältnisses in Abhängigkeit von der Motordrehzahl, einem Frischluftdurchsatz, einem Durchsatz an Kraftstoff, der in die Brennkraftmaschine eingespritzt wird, und einem Durchsatz der zurückgeführten Abgase umfasst.

**Claims**

1. System for estimating the richness of the gaseous mixture in the combustion chamber of an internal combustion engine (1) of a motor vehicle power plant, comprising means (43) for injecting an additional combustible gas into the fresh air intake circuit (3) of the engine, the proportion of the additional combustible gas that is trapped in the combustion chamber being burnt during a combustion, **characterized in that** it comprises means (36, 44) for measuring the concentrations of the additional gas in the fresh air intake circuit (3) and in the gas exhaust circuit (4) of the engine respectively, means (46) for determining a ratio between the measurement of the concentration of the additional gas in the intake circuit and the measurement of the concentration of the additional gas in the exhaust circuit, and means (47) for estimating the richness of the gaseous mixture in the combustion chamber of the engine from the determined ratio.

2. System according to Claim 1, in which the engine (1) comprises several cylinders and the estimating means (47) are also configured to estimate a flow rate of the residual gases in the cylinders from the determined ratio, and for estimating the richness of the gaseous mixture in the combustion chamber of the engine from the estimated flow rate of the residual gases.

3. System according to Claim 1 or 2, in which the power plant comprises a partial exhaust gas recirculation circuit (5) connected to the fresh air intake circuit (3).

4. System according to one of Claims 1 to 3, in which the internal combustion engine (1) is of the two-stroke type.

5. System according to Claim 3 or 4, in which the estimating means (47) are configured to establish a map of the determined ratio as a function of a fresh air flow rate, a flow rate of fuel injected into the engine, and a flow rate of the recirculated exhaust gases.

6. Method for estimating the richness of the gaseous mixture in the combustion chamber of an internal combustion engine of a motor vehicle power plant, involving injecting (SI) an additional combustible gas into the fresh air intake circuit of the engine, the proportion of the additional combustible gas that is trapped in the combustion chamber being burnt during a combustion, **characterized in that** it involves determining (S3) a ratio between a measurement of the concentration of the additional gas in the fresh air intake circuit and a measurement of the concentration of the additional gas in the gas exhaust circuit of the engine, and estimating (S6) the richness of the gaseous mixture in the combustion chamber of the engine from the determined ratio.

7. Method according to Claim 6, in which the engine comprises several cylinders, the method involving an intermediate estimate (S5) of a flow rate of the residual gases in the cylinders from the determined ratio, and the step (S6) of estimating the richness of the gaseous mixture in the combustion chamber of the engine comprises an estimate of said richness from the estimated flow rate of the residual gases.

8. Method according to Claim 6 or 7, in which the power plant comprises a circuit for the partial recirculation of exhaust gases connected to the fresh air intake circuit, the method further involving formulating a map of the determined ratio as a function of the engine speed, a fresh air flow rate, a flow rate of fuel injected into the engine, and a flow rate of the recirculated exhaust gases.

## FIG.1

EP 2 780 573 B1

# FIG.2

```
┌─────────────────┐
│       S1        │
└────────┬────────┘
         ↓
┌─────────────────┐
│       S2        │
└────────┬────────┘
         ↓
┌─────────────────┐
│       S3        │
└────────┬────────┘
         ↓
┌─────────────────┐
│       S4        │
└────────┬────────┘
         ↓
┌─────────────────┐
│       S5        │
└────────┬────────┘
         ↓
┌─────────────────┐
│       S6        │
└─────────────────┘
```

## FIG.3

**EP 2 780 573 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1445458 A1
- DE 10252953 A1